# EUROPÄISCHE PATENTSCHRIFT

(11) **EP 2 746 532 B1**
(45) Veröffentlichungstag und Bekanntmachung des Hinweises auf die Patenterteilung: **14.02.2018**
(21) Anmeldenummer: 12198156.7
(22) Anmeldetag: 19.12.2012
(51) Int. Cl.: F01C 21/08, F04C 18/344, F04C 29/00, F16D 1/108

(54) **Rotoranordnung für eine Vakuumpumpe sowie Vakuumpumpe mit einer derartigen Rotoranordnung**
Rotor assembly for a vacuum pump and vacuum pump with such a rotor assembly
Agencement de rotor pour une pompe à vide ainsi que la pompe à vide dotée d'un tel agencement de rotor

(43) Veröffentlichungstag der Anmeldung: 25.06.2014
(73) Patentinhaber: Pierburg Pump Technology GmbH, 41460 Neuss (DE)
(72) Erfinder: Pilenz, Wolfgang, 47506 Neukirchen-Vluyn (DE)
(74) Vertreter: Patentanwälte ter Smitten Eberlein-Van Hoof Rütten Partnerschaftsgesellschaft mbB

(56) Entgegenhaltungen:
- WO-A1-2006/042493
- WO-A2-02/097274
- WO-A2-2010/025800
- US-A1- 2002 150 489

## Beschreibung

Die Erfindung betrifft eine Rotoranordnung für eine Pumpe zum Einsatz im Kraftfahrzeugbereich mit einem einstückigen Rotorgrundkörper mit mindestens einem Lagerkörper, wobei in dem Rotorgrundkörper mindestens ein beweglich gelagertes Rotorflügelelement angeordnet ist, wobei im Lagerkörper des Rotorgrundkörpers ein Aufnahmeorgan zur formschlüssigen Verbindung mit einem Kupplungsorgan vorgesehen ist. Des Weiteren betrifft die Erfindung eine Vakuumpumpe mit einer derartigen Rotoranordnung.

Rotoranordnungen mit einem einstückigen Rotorgrundkörper für Pumpen zum Einsatz im Kraftfahrzeugbereich sind aus dem Stand der Technik hinlänglich bekannt. So offenbart die DE 299 24 585 U1 eine Vielzahl von Ausführungsformen einer derartigen Rotoranordnung. Insbesondere vor dem Hintergrund eines immer kleineren, zu Verfügung stehenden Bauraumes für den Einsatz von KFZ-Aggregaten, besteht die Notwendigkeit, derartige KFZ-Aggregate, wie z.B. eine Vakuumpumpe immer kompakter zu gestalten. Hierzu ist der DE 299 24 585 U1 die Möglichkeit zu entnehmen, ein Aufnahmeorgan zu formschlüssigen Verbindung mit einem Kupplungsorgan im Lagerkörper des Rotorgrundkörpers vorzusehen. Obwohl hierdurch eine sehr kompakte Bauweise erreichbar ist, ist diese Rotoranordnung sehr Verschleiß- bzw. ausfallanfällig aufgrund der Drehmomentübertragung von einem Antriebsorgan über das Kupplungsorgan in die Rotoranordnung. Aus der US 2002/150489 A1 ist eine Rotoranordnung bekannt, die eine nutförmige Aussparung aufweist, die durch ein Ringelement axial gesichert ist. Darüber hinaus ist aus der WO 2010/025800 A2 ein gattungsgemäßer Rotor aus Sintermaterial bekannt, dessen Drehmomentübertragung ebenfalls beschränkt ist und der sehr aufwendig in der Herstellung ist.

Der Erfindung liegt daher die Aufgabe zugrunde, eine Rotoranordnung bzw. eine Vakuumpumpe bereitzustellen, die den o.g. Nachteil vermeidet, jedoch ebenfalls günstig und kompakt herzustellen ist.

Diese Aufgabe wird dadurch gelöst, dass das Aufnahmeorgan eine erste kreisförmige Aussparung mit einer sich in Richtung des Rotorflügelelementes anschließenden zweiten, angewinkelt zur ersten Aussparung verlaufenden, nutförmigen Aussparung aufweist. Hierdurch findet eine optimierte Drehmomenteinleitung in die Rotoranordnung statt. Darüber hinaus kann auch auf einfache Weise ein Axialversatz zwischen einem Antriebsorgan und der Vakuumpumpe ausgeglichen werden.

In einer besonders vorteilhaften Ausführungsform reicht die zweite Aussparung in den Lagerkörper hinein.

Eine weitere vorteilhafte Ausführungsform ist dadurch gekennzeichnet, dass im Grundbereich der zweiten Aussparung eine Bohrung für eine Transportsicherung vorgesehen ist. Hierdurch ist ein sicherer Transport zu einer Montagestation gewährleistet.

In vorteilhafter Weise ist der Rotorgrundkörper aus Stahl hergestellt.

Die Aufgabe wird ebenfalls durch eine Vakuumpumpe mit einer derartigen Rotoranordnung gelöst, wobei eine Gehäuseanordnung vorgesehen ist, in der die Rotoranordnung derart angeordnet ist, dass das Rotorflügelelement mit einem Gehäusewandteil in Wirkverbindung steht, wobei das Kupplungsorgan einen scheibenförmigen Kupplungskörper aufweist, der ein Kupplungselement für den Eingriff in die zweite Aussparung besitzt, wobei an der dem Kupplungselement gegenüber gelegenen Fläche des scheibenförmigen Kupplungskörpers Antriebskoppelmittel zur Verbindung mit einem Antriebsorgan vorgesehen sind. Hierbei ist es vorteilhaft, wenn das Kupplungselement als Kupplungszweiflach ausgebildet ist. In besonders vorteilhafter Weise können die Antriebskoppelmittel zapfenförmig ausgebildet sein, wobei deren Längsachse senkrecht zur Längsachse des Kupplungszweiflaches verläuft. Auch ist es zur Drehmomenteinleitung besonders vorteilhaft, wenn der Kupplungszweiflach über das scheibenförmige Kupplungsorgan hinaus reicht.

Die Erfindung wird anhand einer Zeichnung näher erläutert, hierbei zeigt:
Figur 1 eine perspektivische Ansicht eines Rotorgrundkörpers einer erfindungsgemäßen Rotoranordnung,
Figur 2 eine perspektivische Ansicht eines Kupplungsorgans zum Einsatz in die Rotoranordnung,
Figur 3 eine Schnittansicht der Rotoranordnung aus Figur 1 und des eingesetzten Kupplungsorgans aus Figur 2, und
Figur 4 eine perspektivische Schnittansicht einer erfindungsgemäßen Vakuumpumpe.

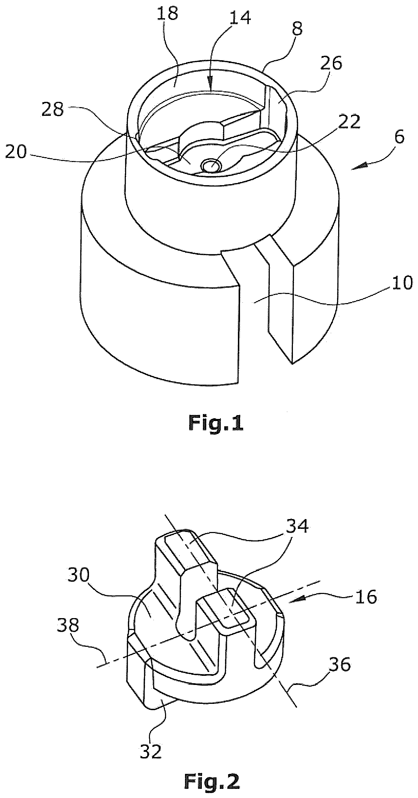

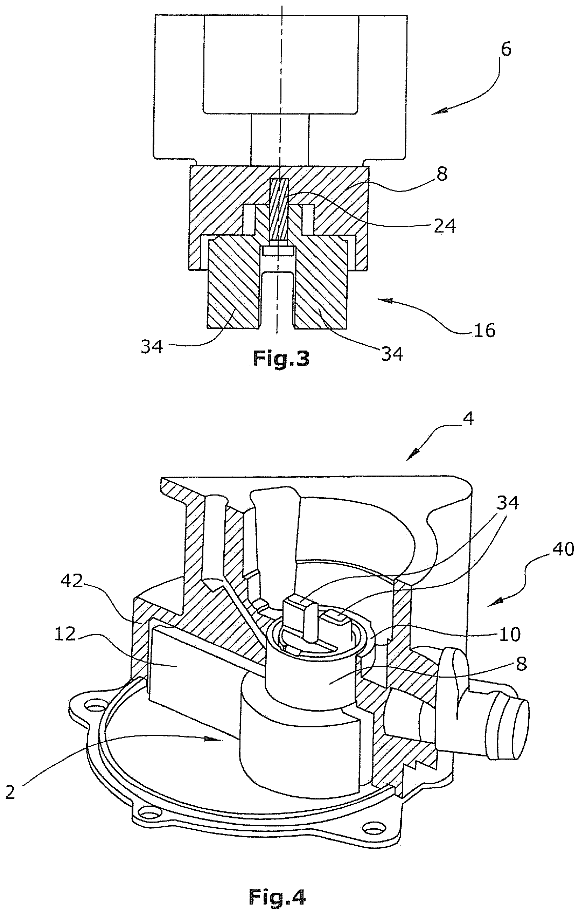

Figur 1 zeigt eine perspektivische Ansicht eines Rotorgrundkörpers 6 einer erfindungsgemäßen Rotoranordnung 2 für eine im vorliegenden Ausführungsbeispiel ausgewählte Vakuumpumpe 4 (siehe hierzu Figur 4). Der einstückige Rotorgrundkörper 6 besitzt einen Lagerkörper 8. In dem Rotorgrundkörper 6 ist zudem auf bekannte Weise ein Schlitz 10 vorgesehen in dem ein Rotorflügelelement 12 (siehe hierzu Figur 4) beweglich angeordnet werden kann. Es sollte deutlich sein, dass der Rotorgrundkörper bei anderen Ausführungen von Pumpen auch weitere Flügelelemente aufnehmen kann.

Im Lagerkörper 8 ist ein Aufnahmeorgan 14 zur formschlüssigen Verbindung mit einem Kupplungsorgan 16 (siehe Figur 2) vorgesehen. Das Aufnahmeorgan 14 weist eine erste kreisförmige Aussparung 18 mit einer sich in Richtung des Schlitzes 10, und damit in Richtung des Rotorflügelelementes 12 anschließenden zweiten, angewinkelt zur ersten Aussparung des Lagerkörpers 8 verlaufenden, nutförmigen Aussparung 20 aufweist. Im vorliegenden Ausführungsbeispiel ist ein rechter Winkel ausgewählt, so dass die zweite Aussparung 20 in Querrichtung zur ersten Aussparung 18 verläuft. Desweiteren ist eine Bohrung 22 vorgesehen, mit der das Kupplungsorgan 16 zur Transportsicherung mittels eines Befestigungsorganes 24, beispielsweise einem Kerbnagel (siehe hierzu Figur 3) befestigt werden kann. Auch zu erkennen ist, dass die zweite Aussparung 20 an den Positionen 26, 28 in den Lagerkörper 8 hineinreicht, wodurch die Drehmomenteinleitung verbessert wird. Vorteilhafterweise ist hier der Rotorgrundkörper 6 aus Stahl hergestellt.

Figur 2 zeigt in einer perspektivischen Ansicht das Kupplungsorgan 16. Das Kupplungsorgan 16 weist einen scheibenförmigen Kupplungskörper 30 auf der ein Kupplungselement 32 besitzt. Dieses Kupplungselement 32 ist im vorliegenden Ausführungsbeispiel als Kupplungszweiflach ausgebildet, so dass ein einfacher Eingriff in die zweite Aussparung 20 möglich ist. Der Kupplungszweiflach 32 ist hier derart ausgebildet das er über das scheibenförmige Kupplungskörper 30 hinausreicht, so dass ein Eingriff an den Positionen 26, 28 im Lagerkörper 18 gewährleistet ist. Auf der dem Kupplungszweiflach 32 gegenüber gelegenen Fläche des scheibenförmigen Kupplungskörpers 30 sind Antriebskoppelmittel 34 zur Verbindung mit einem nicht weiter dargestellten Antriebsorgan vorgesehen. Das Antriebsorgan kann beispielsweise eine an sich bekannte Nockenwelle sein. Dementsprechend sind die Antriebskoppelmittel 34 im vorliegenden Ausführungsbeispiel auch zapfenförmig ausgebildet, wobei deren Längsachse 36 senkrecht zur Längsachse 38 des Kupplungszweiflaches 32 verläuft.

Figur 3 zeigt nun eine Schnittansicht des Rotorgrundkörpers 6 mit dem eingebrachten Kupplungsorgan 16. Wie bereits angedeutet wird das Kupplungsorgan 16 zur Transportsicherung mittels eines Kerbnagels 24 am Rotorgrundkörper 6 befestigt.

Figur 4 zeigt nun eine Vakuumpumpe mit der erfindungsgemäßen Rotoranordnung 2, die hier auch das Rotorflügelelement 4 aufweist. Der Lagerkörper 8 ist in einem Gehäuseteil 10 eines Gehäuses 14 der Vakuumpumpe 4 gelagert. Das Rotorflügelelement 12 steht zum Aufbau des Vakuums auf bekannte Weise mit einem Gehäusewandteil 42 des Gehäuses 40 in Wirkverbindung. Über die zapfenförmige Antriebskoppelmittel 34 ist die Vakuumpumpe 4 auf einfache Weise, beispielsweise mit einer nicht weiter dargestellten Nockenwelle zu verbinden.

Es sollte deutlich sein, dass durch die Erfindung eine wesentliche Reduzierung des axialen Bauraumes bei einer sicheren Übertragung des Drehmomentes möglich ist. Darüber hinaus kann auch noch ein Axialversatz beispielsweise zwischen der Nockenwelle und der Vakuumpumpe 4 ausgeglichen werden.

## Patentansprüche

1. Rotoranordnung für eine Pumpe (4) zum Einsatz im Kraftfahrzeugbereich mit einem einstückigen Rotorgrundkörper (6) mit mindestens einem Lagerkörper (8), wobei in dem Rotorgrundkörper (6) mindestens ein beweglich gelagertes Rotorflügelelement (12) angeordnet ist, wobei im Lagerkörper des Rotorgrundkörpers (6) ein Aufnahmeorgan (14) zur formschlüssigen Verbindung mit einem Kupplungsorgan (16) vorgesehen ist, **dadurch gekennzeichnet ist, dass** das Aufnahmeorgan (14) eine erste kreisförmige Aussparung (18) mit einer sich in Richtung des Rotorflügelelementes (12) anschließenden zweiten nutförmigen Aussparung (20) aufweist, derart, dass die zweite nutförmige Aussparung (20) angewinkelt zur ersten kreisförmigen Aussparung (18) verläuft, wobei die zweite nutförmige Aussparung (20) in den Lagerkörper (8) hineinreicht und wobei der Rotorgrundkörper (6) aus Stahl hergestellt ist.^

2. Rotoranordnung nach Anspruch 1, **dadurch gekennzeichnet, dass** im Grundbereich der zweiten Aussparung (20) eine Bohrung (22) für eine Transportsicherung (24) vorgesehen ist.

3. Vakuumpumpe mit einer Rotoranordnung nach Anspruch 1 oder 2, **dadurch gekennzeichnet, dass** eine Gehäuseanordnung (40) vorgesehen ist, in der die Rotoranordnung (2) derart angeordnet ist, dass das Rotorflügelelement (12) mit einem Gehäusewandteil (42) in Wirkverbindung steht, wobei das Kupplungsorgan (16) einen scheibenförmigen Kupplungskörper (30) aufweist, der ein Kupplungselement (32) für den Eingriff in die zweite Aussparung 20 besitzt, wobei an der dem Kupplungselement (32) gegenüber gelegenen Fläche des scheibenförmigen Kupplungskörpers (30) Antriebskoppelmittel (34) zur Verbindung mit einem Antriebsorgan vorgesehen sind.

4. Vakuumpumpe nach Anspruch 3, **dadurch gekennzeichnet, dass** das Kupplungselement (32) als Kupplungszweiflach ausgebildet ist.

5. Vakuumpumpe nach Anspruch 4, **dadurch gekennzeichnet, dass** die Antriebskoppelmittel (34) zapfenförmig ausgebildet sind, wobei deren Längsachse (36) senkrecht zur Längsachse (38) des Kupplungszweiflaches (32) verläuft.

6. Vakuumpumpe nach Anspruch 3 oder 4, **dadurch gekennzeichnet, dass** der Kupplungszweiflach (32) über das scheibenförmige Kupplungsorgan (30) hinausreicht.

## Claims

1. Rotor assembly for a pump (4) for use in the automotive sector, comprising an integral rotor base body (6) with at least one bearing body (8), wherein at least one movably supported rotor blade element (12) is arranged in the rotor base body (6), wherein a receiving member (14) is provided in the bearing body of the rotor base body (6) for a positive connection with a coupling member (16), **characterized in that** the receiving member (14) has a first, circular recess (18) with a second, groove-shaped recess (20) adjoining the same in the direction of the rotor blade element (12), such that the second, groove-shaped recess (20) extends at an angle with respect to the first, circular recess (18), wherein the second, groove-shaped recess (20) extends into the bearing body (8), and wherein the rotor base body (6) is made of steel.

2. Rotor assembly of claim 1, **characterized in that** a bore (22) for a transport securing device (24) is provided in the bottom region of the second, groove-shaped recess (20).

3. Vacuum pump with a rotor assembly of claim 1 or 2, **characterized in that** a housing assembly (40) is provided in which the rotor assembly (2) is arranged such that the rotor blade element (12) is operatively connected with a housing wall part (42), wherein the coupling member (16) has a disc-shaped coupling member (30) with a coupling element (32) for engagement into the second recess (20), wherein drive coupling means (34) for connection with a drive member are provided on the surface of the disc-shaped coupling member (30) opposite the coupling member (32).

4. Vacuum pump of claim 3, **characterized in that** the coupling element (832) is configured as a coupling dihedron.

5. Vacuum pump of claim 4, **characterized in that** the drive coupling means (34) are of pin-like shape, wherein their longitudinal axis (36) extends vertically to the longitudinal axis (38) of the coupling dihedron (32).

6. Vacuum pump of claim 3 or 4, **characterized in that** the coupling dihedron (32) extends beyond the disc-shaped coupling member (30).

## Revendications

1. Agencement de rotor pour une pompe (4) destinée à l'utilisation dans la domaine automobile, comprenant un corps de base de rotor (6) monobloc avec au moins un corps de support (8), dans lequel au moins un élément pale de rotor (12), qui est supporté de manière mobile, est disposé dans le corps de base de rotor (6), dans lequel un organe récepteur (14) est prévu dans le corps de support (8) du corps de base de rotor (6) pour une liaison positive avec un organe de couplage (16), **caractérisé en ce que** l'organe récepteur (14) présent un premier renfoncement (18) circulaire avec un deuxième renfoncement (20), en forme de rainure, joignant le premier renfoncement vers ledit élément pale de rotor (12), de sorte que le deuxième renfoncement (20) en forme de rainure s'étend sous un angle par rapport au premier renfoncement (18) circulaire, le deuxième renfoncement (20) en forme de rainure s'étendant dans le corps de support (8), et dans lequel le corps de base de rotor (6) est fabriqué d'acier.

2. Agencement de rotor selon la revendication 1, **caractérisé en ce qu'**un alésage (22) pour un dispositif de sécurité de transport (24) est prévu dans la région de fond du deuxième renfoncement (20).

3. Pompe à vide avec un agencement de rotor selon la revendication 1 ou 2, **caractérisée en ce qu'**un ensemble boitier (40) est prévu dans lequel l'agencement de rotor (2) est disposé de sorte que ledit élément pale de rotor (12) est en liaison active avec une partie de la paroi de boitier (42), dans laquelle l'organe de couplage (16) comprend un organe de couplage (30) en forme de disque, présentant un élément de couplage (32) pour s'engager dans le deuxième renfoncement (20), dans laquelle des moyens de couplage d'entrainement (34) pour le raccordement avec un organe d'entrainement sont prévus sur une face de l'organe de couplage (30) en forme de disque opposée à l'élément de couplage (32).

4. Pompe à vide selon la revendication 3, **caractérisée en ce que** l'élément de couplage (32) est réalisé sous forme d'un dièdre de couplage.

5. Pompe à vide selon la revendication 4, **caractérisée en ce que** les moyens de couplage d'entrainement (34) sont réalisés sous forme de tenon, l'axe longitudinal (36) s'étendant perpendiculairement à l'axe longitudinal (36) du dièdre de couplage (32).

6. Pompe à vide selon les revendications 3 ou 4, **caractérisée en ce que** le dièdre de couplage (32) s'étend au-delà de l'organe de couplage (30) en forme de disque
